# EUROPEAN PATENT APPLICATION

(11) **EP 4 783 683 A1**
(43) Date of publication of application: **29.07.2026**
(21) Application number: 26153780.7
(22) Date of filing: 23.01.2026
(51) Int. Cl.: H04W 52/14

(54) **ADAPTIVE ACCESS POINT**

(30) Priority: 24.01.2025 US 202519036738
(71) Applicant: Comcast Cable Communications, LLC, Philadelphia, PA 19103 (US)
(72) Inventor: PARATHI, Suresh Babu, Philadelphia, 19103 (US); RAVISANKAR, Arun, Philadelphia, 19103 (US); URBAN, David J., Philadelphia, 19103 (US)
(74) Representative: V.O.

(57) **Abstract**

An access point may communicate with a wireless device. Different network devices of the access point may use two different power levels (e.g., lower and higher power levels) for communication. A spectrum in a frequency band may be split into multiple sub-spectrums (e.g., channels) that may operate at different power levels. For example, a first sub-spectrum (e.g., channel) may be used for a lower power level and/or a second sub-spectrum (e.g., channel) may be used for a higher power level. The wireless device may determine which power level to use to connect to the access point.

## Description

### BACKGROUND

Device network connectivity is ubiquitous. Devices may connect to networks using access points. As connectivity and data requirements grow, additional connection schemes for dynamic and efficient network management may be advantageous. Networks may support an increasing number of connected devices. Reliable and highspeed connections may be essential for seamless user experiences across various applications.

### SUMMARY

The following summary presents a simplified summary of certain features. The summary is not an extensive overview and is not intended to identify key or critical elements.

An access point may communicate with a wireless device. At least two different power levels (e.g., a lower power level or a higher power level, etc.) may be used for communication between the access point and the wireless device. For example, a first group of network devices of the access point may use a first power level (e.g., lower power level) and/or a second portion of network devices may use a second power level (e.g., higher power level). If a spectrum in a frequency band is used for the communication, the spectrum in the frequency band may be split into a plurality of sub-spectrums (e.g., channels). The plurality of sub-spectrums may be used for different power levels. For example, a first sub-spectrum may be used for a lower power level and/or a second sub-sub-spectrum may be used for a higher power level. The wireless device may determine whether to use the first power level (e.g., lower power level) or the second power level (e.g., higher power level) to connect to the access point.

These and other features and advantages are described in greater detail below.

### BRIEF DESCRIPTION OF THE DRAWINGS

Some features are shown by way of example, and not by limitation, in the accompanying drawings. In the drawings, like numerals reference similar elements.
FIG. 1 shows an example communication network.
FIG. 2 shows hardware elements of a computing device.
FIG. 3 shows an example spectrum distribution in a frequency band that an access point may use for communication.
FIG 4A shows an example of an access point with a plurality of chains.
FIG 4B shows an example of an access point with a plurality of chains.
FIG. 5 shows an example method for an access point to connect to a wireless device.
FIG. 6 shows an example method for a wireless device to connect to an access point.
FIG. 7 shows an example method for a computing device and an access point.
FIG. 8 shows an example method for an access point, a wireless device, and a computing device.

### DETAILED DESCRIPTION

The accompanying drawings, which form a part hereof, show examples of the disclosure. It is to be understood that the examples shown in the drawings and/or discussed herein are non-exclusive and that there are other examples of how the disclosure may be practiced.

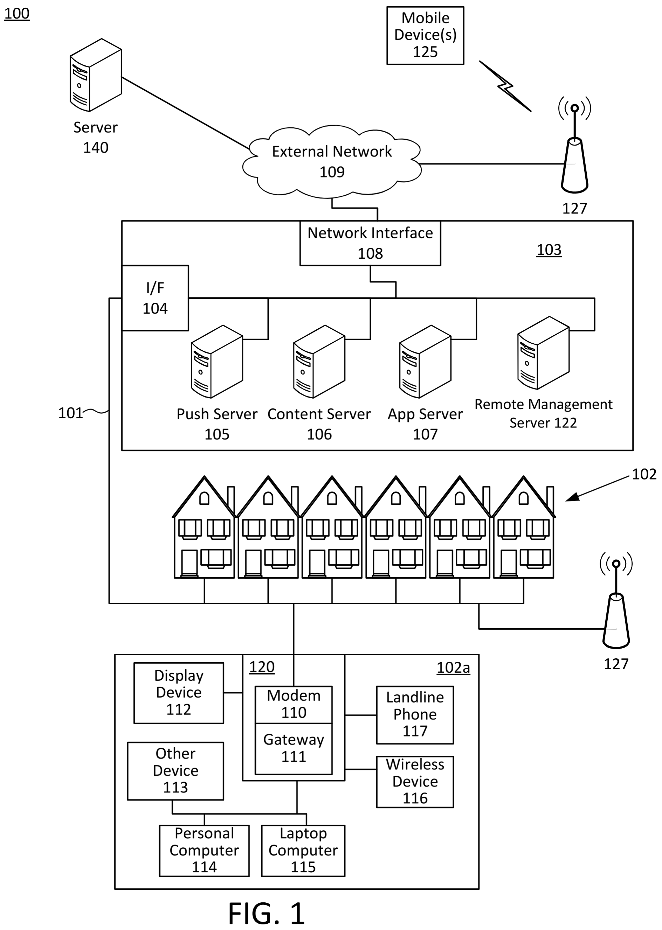

FIG. 1 shows an example communication network 100 in which features described herein may be implemented. The communication network 100 may comprise one or more information distribution networks of any type, such as, without limitation, a telephone network, a wireless network (e.g., an LTE network, a 5G network, a WiFi IEEE 802.11 network, a WiMAX network, a satellite network, and/or any other network for wireless communication), an optical fiber network, a coaxial cable network, and/or a hybrid fiber/coax distribution network. The communication network 100 may use a series of interconnected communication links 101 (e.g., coaxial cables, optical fibers, wireless links, etc.) to connect multiple premises 102 (e.g., businesses, homes, consumer dwellings, train stations, airports, etc.) to a local office 103 (e.g., a headend). The local office 103 may send downstream information signals and receive upstream information signals via the communication links 101. Each of the premises 102 may comprise devices, described below, to receive, send, and/or otherwise process those signals and information contained therein.

The communication links 101 may originate from the local office 103 and may comprise components not shown, such as splitters, filters, amplifiers, etc., to help convey signals clearly. The communication links 101 may be coupled to one or more wireless access points 127 configured to communicate with one or more mobile devices 125 (e.g., wireless device, user device) via one or more wireless networks. The mobile devices 125 may comprise smart phones, tablets or laptop computers with wireless transceivers, tablets or laptop computers communicatively coupled to other devices with wireless transceivers, and/or any other type of device configured to communicate via a wireless network.

The local office 103 may comprise an interface 104. The interface 104 may comprise one or more computing devices configured to send information downstream to, and to receive information upstream from, devices communicating with the local office 103 via the communications links 101. The interface 104 may be configured to manage communications among those devices, to manage communications between those devices and backend devices such as servers 105-107 and 122, and/or to manage communications between those devices and one or more external networks 109. The interface 104 may, for example, comprise one or more routers, one or more base stations, one or more optical line terminals (OLTs), one or more termination systems (e.g., a modular cable modem termination system (M-CMTS) or an integrated cable modem termination system (I-CMTS)), one or more digital subscriber line access modules (DSLAMs), and/or any other computing device(s). The local office 103 may comprise one or more network interfaces 108 that comprise circuitry needed to communicate via the external networks 109. The external networks 109 may comprise networks of Internet devices, telephone networks, wireless networks, wired networks, fiber optic networks, and/or any other desired network. The local office 103 may also or alternatively communicate with the mobile devices 125 via the interface 108 and one or more of the external networks 109, e.g., via one or more of the wireless access points 127.

The push notification server 105 may be configured to generate push notifications to deliver information to devices in the premises 102 and/or to the mobile devices 125. The content server 106 may be configured to provide content to devices in the premises 102 and/or to the mobile devices 125. This content may comprise, for example, video, audio, text, web pages, images, files, etc. The content server 106 (or, alternatively, an authentication server) may comprise software to validate user identities and entitlements, to locate and retrieve requested content, and/or to initiate delivery (e.g., streaming) of the content. The application server 107 may be configured to offer any desired service. For example, an application server may be responsible for collecting, and generating a download of, information for electronic program guide listings. Another application server may be responsible for monitoring user viewing habits and collecting information from that monitoring for use in selecting advertisements. Yet another application server may be responsible for formatting and inserting advertisements in a video stream being sent (e.g., transmitted) to devices in the premises 102 and/or to the mobile devices 125. The local office 103 may comprise additional servers, such as the remote management server 122 (described below), additional push, content, and/or application servers, and/or other types of servers. Although shown separately, the push server 105, the content server 106, the application server 107, the remote management server 122, and/or other server(s) may be combined. The servers 105, 106, 107, and 122, and/or other servers, may be computing devices and may comprise memory storing data and also storing computer executable instructions that, when executed by one or more processors, cause the server(s) to perform steps described herein.

In one or more example configurations, the communication network 100 may further include a server 140 (e.g., cloud server, or automated frequency coordination (AFC) server) The server 140 may communicate with the local office 103 (and/or one or more other local offices) one or more premises 102, one or more access points 127, one or more mobile devices 125, and/or one or more other computing devices, for example, via the external network 109 and/or communication links 101. The server 140 may exchange information with one or more access points 127, as described below. Also or alternatively, the server 140 may be located in the local office 103, in a premises 102, and/or elsewhere in a network. Also or alternatively, the push server 105, the content server 106, the application server 107, the remote management server 122, and/or other server(s) may be combined. The servers 105, 106, 107, and 122, and/or other servers, may be computing devices and may comprise memory storing data and also storing computer executable instructions that, when executed by one or more processors, cause the server(s) to perform steps described herein.

An example premises 102a may comprise an interface 120. The interface 120 may comprise circuitry used to communicate via the communication links 101. The interface 120 may comprise a modem 110, which may comprise transmitters and receivers used to communicate via the communication links 101 with the local office 103. The modem 110 may comprise, for example, a coaxial cable modem (for coaxial cable lines of the communication links 101), a fiber interface node (for fiber optic lines of the communication links 101), twisted-pair telephone modem, a wireless transceiver, and/or any other desired modem device. One modem is shown in FIG. 1, but a plurality of modems operating in parallel may be implemented within the interface 120. The interface 120 may comprise a gateway 111. The modem 110 may be connected to, or be a part of, the gateway 111. The gateway 111 may be a computing device that communicates with the modem(s) 110 to allow one or more other devices in the premises 102a to communicate with the local office 103 and/or with other devices beyond the local office 103 (e.g., via the local office 103 and the external network(s) 109). The gateway 111 may comprise a set-top box (STB), digital video recorder (DVR), a digital transport adapter (DTA), a computer server, and/or any other desired computing device.

The gateway 111 may also comprise one or more local network interfaces to communicate, via one or more local networks, with devices in the premises 102a. Such devices may comprise, e.g., display devices 112 (e.g., televisions), other devices 113 (e.g., a DVR or STB), personal computers 114, laptop computers 115, wireless devices 116 (e.g., wireless routers, wireless laptops, notebooks, tablets and netbooks, cordless phones (e.g., Digital Enhanced Cordless Telephone-DECT phones), mobile phones, mobile televisions, personal digital assistants (PDA)), landline phones 117 (e.g., Voice over Internet Protocol-VoIP phones), and any other desired devices. Example types of local networks comprise Multimedia Over Coax Alliance (MoCA) networks, Ethernet networks, networks communicating via Universal Serial Bus (USB) interfaces, wireless networks (e.g., IEEE 802.11, IEEE 802.15, Bluetooth), networks communicating via in-premises power lines, and others. The lines connecting the interface 120 with the other devices in the premises 102a may represent wired or wireless connections, as may be appropriate for the type of local network used. One or more of the devices at the premises 102a may be configured to provide wireless communications channels (e.g., IEEE 802.11 channels) to communicate with one or more of the mobile devices 125, which may be on- or off-premises.

The mobile devices 125, one or more of the devices in the premises 102a, and/or other devices may receive, store, output, and/or otherwise use assets. An asset may comprise a video, a game, one or more images, software, audio, text, webpage(s), data, and/or other content.

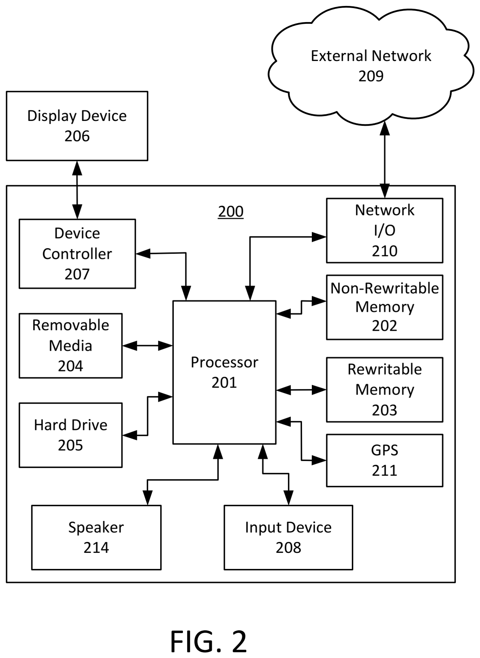

FIG. 2 shows hardware elements of a computing device 200 that may be used to implement any of the computing devices shown in FIG. 1 (e.g., the mobile devices 125, any of the devices shown in the premises 102a, any of the devices shown in the local office 103, any of the wireless access points 127, any devices with the external network 109) and any other computing devices discussed herein. The computing device 200 may comprise one or more processors 201, which may execute instructions of a computer program to perform any of the functions described herein. The instructions may be stored in a non-rewritable memory 202 such as a read-only memory (ROM), a rewritable memory 203 such as random access memory (RAM) and/or flash memory, removable media 204 (e.g., a USB drive, a compact disk (CD), a digital versatile disk (DVD)), and/or in any other type of computer-readable storage medium or memory. Instructions may also be stored in an attached (or internal) hard drive 205 or other types of storage media. The computing device 200 may comprise one or more output devices, such as a display device 206 (e.g., an external television and/or other external or internal display device) and a speaker 214, and may comprise one or more output device controllers 207, such as a video processor or a controller for an infra-red or BLUETOOTH transceiver. One or more user input devices 208 may comprise a remote control, a keyboard, a mouse, a touch screen (which may be integrated with the display device 206), microphone, etc. The computing device 200 may also comprise one or more network interfaces, such as a network input/output (I/O) interface 210 (e.g., a network card) to communicate with an external network 209. The network I/O interface 210 may be a wired interface (e.g., electrical, RF (via coax), optical (via fiber)), a wireless interface, or a combination of the two. The network I/O interface 210 may comprise a modem configured to communicate via the external network 209. The external network 209 may comprise the communication links 101 discussed above, the external network 109, an in-home network, a network provider's wireless, coaxial, fiber, or hybrid fiber/coaxial distribution system (e.g., a DOCSIS network), or any other desired network. The computing device 200 may comprise a location-detecting device, such as a global positioning system (GPS) microprocessor 211, which may be configured to receive and process global positioning signals and determine, with possible assistance from an external server and antenna, a geographic position of the computing device 200.

Although FIG. 2 shows an example hardware configuration, one or more of the elements of the computing device 200 may be implemented as software or a combination of hardware and software. Modifications may be made to add, remove, combine, divide, etc. components of the computing device 200. Additionally, the elements shown in FIG. 2 may be implemented using basic computing devices and components that have been configured to perform operations such as are described herein. For example, a memory of the computing device 200 may store computer-executable instructions that, when executed by the processor 201 and/or one or more other processors of the computing device 200, cause the computing device 200 to perform one, some, or all of the operations described herein. Such memory and processor(s) may also or alternatively be implemented through one or more Integrated Circuits (ICs). An IC may be, for example, a microprocessor that accesses programming instructions or other data stored in a ROM and/or hardwired into the IC. For example, an IC may comprise an Application Specific Integrated Circuit (ASIC) having gates and/or other logic dedicated to the calculations and other operations described herein. An IC may perform some operations based on execution of programming instructions read from ROM or RAM, with other operations hardwired into gates or other logic. Further, an IC may be configured to output image data to a display buffer.

Referring back to FIG. 1, the access point 127 may operate at a plurality of bands (e.g., 2.4 GHz band, 5 GHz band, 6 GHz band, or any other bands). For example, the access point 127 (e.g., 2.4 GHz band access point) may operate between 2.400 to 2.4835 GHz (e.g., 2.4 GHz band) and may provide a wider coverage area compared to higher frequency bands (e.g., 5 GHz band, etc.). The access point 127 (e.g., 5 GHz band access point) may operate, for example, between 5.150 to 5.825 GHz (e.g., 5 GHz band) and may provide higher data rates in a shorter range compared to lower frequency bands (e.g., 2.4 GHz band, etc.).

The access point 127 (e.g., 6 GHz band access point) may operate, for example, between 5.925 to 7.125 GHz. The access point 127 operating in the 6 GHz band may provide more channels compared to other band access points (e.g., 2.4GHz band access point, 5 GHz band access point, etc.), which may help reduce congestion.

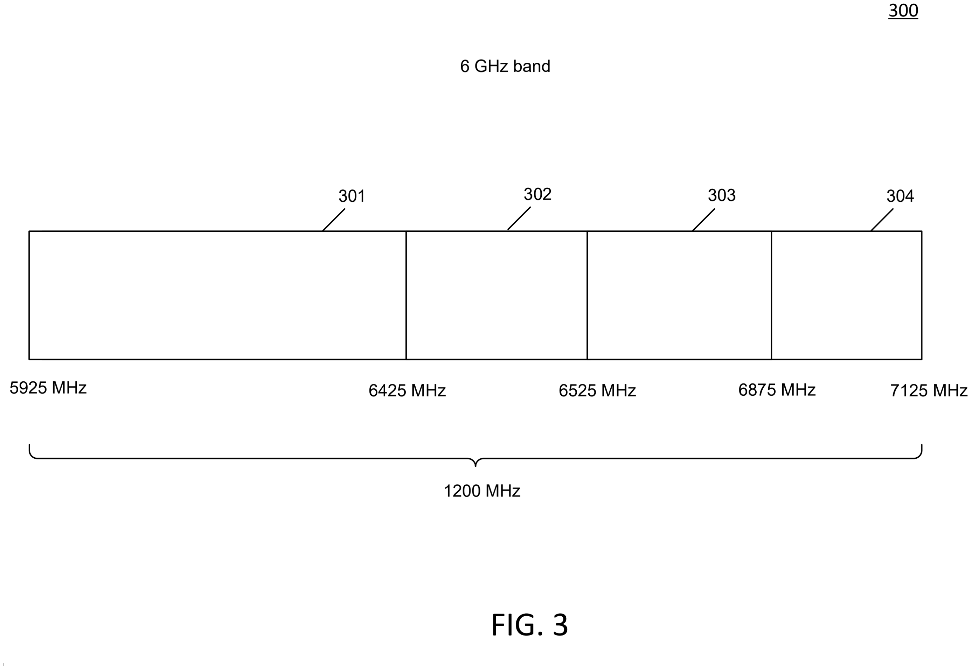

FIG. 3 shows an example spectrum distribution in a frequency band that an access point (e.g., access point 127) may use for communication. As described with respect to FIG. 3, for example, a spectrum (e.g., 1200 MHz spectrum) in a frequency band (e.g., 6 GHz band) may be divided into a plurality of sub-bands (e.g., Unlicensed National Information Infrastructure (UNII)-5 sub-band 301, UNII-6 sub-band 302, UNII-7 sub-band 303, UNII-8 sub-band 304, etc.). Furthermore, each of the plurality of sub-bands may comprise multiple channels, wherein each channel may have a bandwidth of, for example, 20 MHz, 40 MHz, 80 MHz, 160 MHz, 320 MHz, etc. Any one of the sub-bands (e.g., UNII)-5 sub-band 301, UNII-6 sub-band 302, UNII-7 sub-band 303, UNII-8 sub-band 304) may be used, for example, for a lower power level or a higher power level. For example, if the UNII-5 sub-band 301 is used for either a lower power level or a higher power level, any channel that belongs to the UNII-5 sub-band 301 may be used for either a lower power level or a higher power level. As described with respect to FIG. 3, the bandwidths of the sub-bands, for example, may be 500 MHz (e.g., 6425 MHz - 5925 MHz) for the UNII-5 sub-band 301, 100 MHz (e.g., 6525 MHz - 6425 MHz) for the UNII-6 sub-band 302, 350 MHz (e.g., 6875 MHz - 6425 MHz) for the UNII-7 sub-band 303, and 250 MHz (e.g., 7125 MHz - 6425 MHz) for the UNII-5 sub-band 304. If the bandwidth of a channel (e.g., single channel, entire channel) is bigger than the bandwidth of a sub-band, the channel may not belong to the sub-band. For example, if a channel bandwidth is, for example, 160 MHz, the channel may not be allotted to, for example, the UNII-6 sub-band 302.

Some Wi-Fi devices (e.g., access points) operating, for example, in the 6 GHz band may use at least two distinct power settings (e.g., regulatory power settings), for example, Low Power Indoor (LPI) and Standard Power (SP), which may be designed to accommodate different coverage needs and usage scenarios. LPI is a regulatory category designated for Wi-Fi devices that operate under restricted power levels, for example, within indoor settings. The maximum power level for LPI devices operating in the 6 GHz band may be capped to minimize interference with other devices and services. For example, LPI devices may be allowed a maximum conducted output power of an effective isotropic radiated power (EIRP), for example, of about 30 dBm. This power setting may be specifically designed such that the Wi-Fi signals are increasingly contained primarily within indoor environments, reducing the likelihood of interference with external networks and services that operate in the same or adjacent frequency bands.

LPI devices may function indoors with reduced transmission power, for example, to limit the signal's ability to penetrate external walls, thereby lessening interference with outside networks. Regulations governing LPI devices dictate maximum power outputs and operational conditions to ensure minimal disruption to adjacent frequency bands. This setup may be especially beneficial in densely populated environments, for example, such as apartment complexes or office buildings, where managing interference and/or improving spectrum efficiency may be of increased importance. By adhering to LPI standards, wireless devices and/or any type of devices including, for example, smartphones, routers, or laptops, etc. may coexist more harmoniously, improving reliability and/or network performance efficiency for users within these indoor environments.

Standard Power (SP) in Wi-Fi technology refers to the regulatory category for devices that operate with higher transmission power compared to LPI devices, for example, allowing for broader signal coverage. This setting may be used, for example, for Wi-Fi networks that extend connectivity over larger indoor spaces and/or in some cases, outdoor areas, depending on regulatory approvals. The maximum power level for SP devices, for example, operating in the 6 GHz band, is designed to support broader coverage and more robust performance compared to Low Power Indoor (LPI) devices. SP devices may operate at a maximum conducted output power of an EIRP, for example, of about 36 dBm. The higher power setting may be beneficial for applications of extended coverage, such as in larger indoor spaces or for outdoor areas, improving reliability and/or wireless connection strength over greater distances and through various physical obstructions. The use of SP mode may be subject to additional regulatory requirements such as Automated Frequency Coordination (AFC), for example, to prevent interference with incumbent services in the band.

In at least some wireless communications, some access points within the 6 GHz band may use one channel (e.g., one entire channel) (e.g., 160 MHz or 320 MHz, etc.) for either lower power mode (e.g., low power indoor (LPI)) or higher power mode (e.g., standard power (SP)). Such limitation may lead wireless devices, for example, those capable of dual-mode operation (e.g., either lower power mode or higher power mode), to use one power mode (e.g., lower power mode or higher power mode). Furthermore, a wireless device that is configured to operate at a higher power mode (e.g., SP mode) may not be able to access the entire channel (e.g., 160 MHz or 320 MHz, etc.), if an access point uses one channel (e.g., 160 MHz or 320 MHz, etc.) for only a lower power mode (e.g., LPI mode). Similarly, a wireless device that is configured to operate at a lower power mode (e.g., SP mode) may not be able to access the channel (e.g., 160 MHz or 320 MHz, etc.), if an access point uses one channel (e.g., 160 MHz or 320 MHz, etc.) for only a higher power mode (e.g., SP mode). This dichotomy may impact wireless device connectivity and/or lead to slower speeds and reduced data throughput. Addressing these limitations may enhance the usability and/or efficiency of access points, for example, operating in the 6 GHz spectrum, improving overall network performance and/or user experience. Aspects of the present disclosure relate to resolving these and other issues, for example, by proposing a more adaptable network configuration, for example, that optimizes both power usage and bandwidth allocation, facilitating a more robust and flexible connection strategy for connected devices.

Referring back to FIG. 1, an access point 127 may comprise a plurality of network devices (e.g., components, network components, radio chains). For example, a network device in an access point 127 may comprise, for example, a combination of components (e.g., hardware components) responsible for transmitting and/or receiving wireless signals. Each network device may comprise at least one antenna, which may comprise the physical structure that may send (e.g., transmit) and/or receive wireless signals.

Access point efficiency may be improved by, for example, splitting a plurality of network devices, for example, to operate in multiple power modes (e.g., lower power mode, higher power mode, etc.). For example, the described technique may enhance the efficiency of access points (e.g., Wi-Fi 6E access points or any other access points, e.g., in 6 GHz band or any other bands), for example, by splitting a plurality of network devices (e.g., 4 network devices, 4x4 Multiple Input Multiple Output (MIMO) or any other MIMO configuration) into, for example, a group of separate network devices (e.g., 2 network devices, 2x2 MIMO or any other MIMO configuration), wherein each group of the separate network devices may operate at a different power level (or mode) and/or potentially on a different channel.

MIMO is a wireless technology used in communication systems. MIMO may use multiple antennas at both the transmitter and receiver ends to send (e.g., transmit) and receive data simultaneously. MIMO may leverage the spatial diversity of the antennas, for example, to enhance signal quality, reduce errors, and/or achieve higher data rates without requiring additional bandwidth or increased transmission power. MIMO may be used in wireless standards. For example, *N x N* MIMO (*N* is a positive number) refers to a wireless communication technology setup that may use *N* antennas, for example, at both the transmitter and receiver ends.

A plurality of network devices may increase data throughput and/or improve reliability, for example, by sending (e.g., transmitting) and/or receiving multiple data streams simultaneously, such as in a *N x N* MIMO system, which may have two transmitters and two receivers, each with its own network device.

This division of network devices (e.g., first group of network devices and second group of network devices) may enable more improved management of spectrum usage and/or power. For example, a first group of network devices may operate at a first power level. A second group of network devices may operate at a second power level (e.g., second maximum EIRP, for example, of about 36 dBm). The first power level may comprise a lower maximum EIRP and the second power level may comprise a higher maximum EIRP. Additionally, the first group of network devices may use a channel belonging to a sub-band that is allotted for the first power level. Similarly, the second group of network devices may use a channel that belongs to a sub-band that is allotted for the second power level. As described herein, each group (e.g., the first group and the second group) of network devices may comprise a plurality of antennas, and the description herein relating to network devices may additionally or alternatively apply to radio antennas.

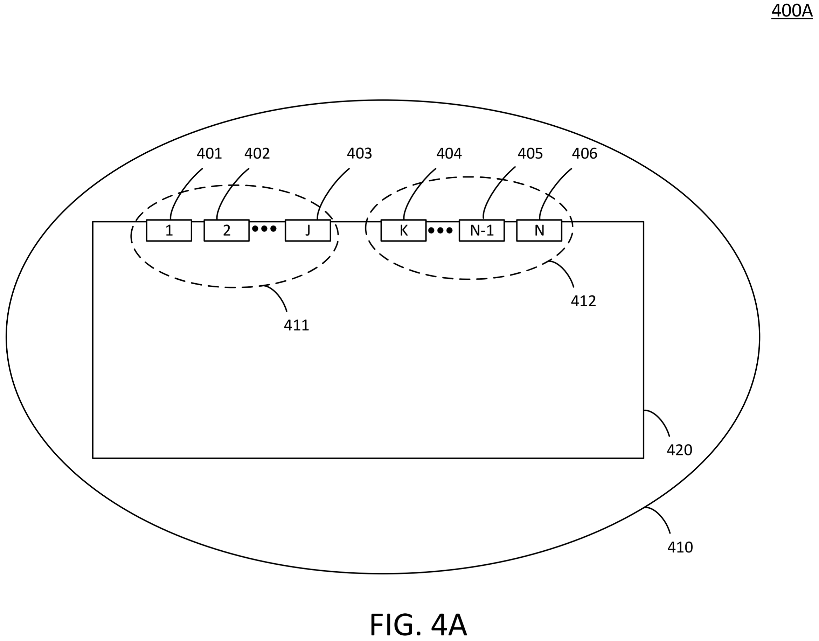

FIG. 4A shows an example of an access point 410 with a plurality of network devices (e.g., network devices 401-406). Access point 410 may be similar to access point 127 of FIG. 1 unless described otherwise. For example, the access point 410 may comprise a chip (or system-on-chip (SOC)) 420. The chip 420 may comprise a total of*N* network devices (e.g., network device 1 401, network device 2 402, ..., network device *J* 403, network device *K* 404, ..., network device *N-1* 405, network device *N* 406), where *N* is a number that is greater than a number *L* and a number *M.* The access point 410 may send (e.g., transmit) and/or receive radio signals via one or more of the *N* network devices 401-406. Although the *N* network devices are shown as being on chip 420, it should be understood that the *N* network devices 401-406 can be on a single component (e.g., chip 420) or a plurality of different components.

As described with respect to FIG. 4A, the *N* network devices 401-406 may be divided into, for example, at least two groups (e.g., first group of network devices 411, second group of network devices 412, etc.). The first group of network devices 411 may comprise, for example, a total of *J* network devices (e.g., network device 1 401, network device 2 402, ..., network device *J* 403), where *J* is a number that is greater than two. The second group of network devices 412 may comprise, for example, a total of *(N-K+1)* network devices (e.g., network device *K* 404, network device *N-1* 405, ..., network device *N* 406), where *K* is a number that is greater than *J*.

The first group of network devices 411 may use a first power level (e.g., lower power level). The first group of network devices 411 may use a first channel that belongs to a first sub-band in a frequency band to communicate with a wireless device (e.g., mobile device 125 of FIG. 1). Additionally, the second group of network devices 412 may use a second power level (e.g., higher power level). The second group of network devices 412 may use a second channel that belongs to a second sub-band in the frequency band to communicate with a wireless device (e.g., mobile device 125).

The access point 410 may broadcast a first message (e.g., beacon message) comprising a network identifier (e.g., service set identifier (SSID)) of the access point 410 via the first group of network devices 411 and the second group of network devices 412. A wireless device (e.g., mobile device 125) may send, to the access point 410, a first response message (e.g., probe message) to connect to the access point 410. The access point 410 may stop using the second group of network devices, for example, for a first pre-determined time, for example, if the access point 410 does not receive a first response message (e.g., probe message) via the second sub-band in the frequency band (e.g., 6 GHz band, etc.), for example, for a second pre-determined time. Any time after the first pre-determined time, the access point may broadcast a first message (e.g., beacon message) via the second sub-band in the frequency band (e.g., 6 GHz band, etc.), for example, to inform that the access point 410 may support the second power.

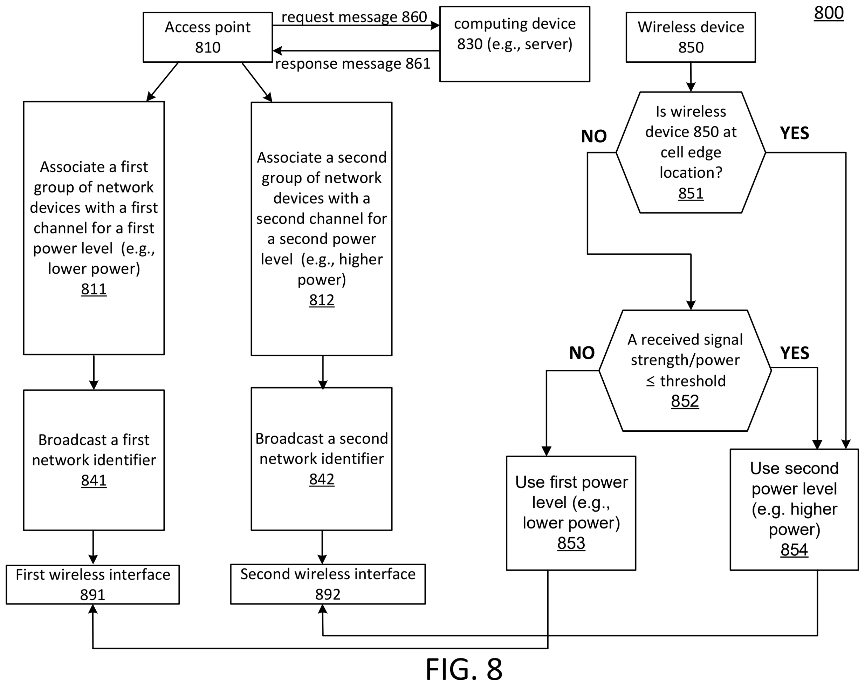

Optionally, if the access point 410 determines to change the power level of the first group of network devices 411 or the second group of network devices 412, the access point 410 may send, to a computing device (e.g., server 140 of FIG. 1, computing device 830 of FIG. 8, cloud server, or automated frequency coordination (AFC) server, etc.), a request message. For example, if the access point 410 determines to use the first power level for the second group of network devices, the access point may send, to the computing device, a request message requesting to use the channel that belongs to the first sub-band in the frequency band (e.g., 6 GHz band, etc.) for the second group of network devices. Additionally or alternatively, if the access point 410 determines to use the second power level for the first group of network devices, the access point may send, to the computing device, a request message requesting to use the channel that belongs to the second sub-band in the frequency band (e.g., 6 GHz band, etc.) for first group of network devices. Based on receiving the request message and/or based on channel availability, the computing device (e.g., server 140 of FIG. 1, computing device 830 of FIG. 8, cloud server, or Automated Frequency Coordination (AFC) server, etc.) may send, to the access point 410, a second response message indicating whether to allow or reject the use of the requested channel in the frequency band. For example, the channel availability in the frequency band may be determined, for example, based on an identification of whether there is an absence of conflicting usage within the frequency band. This identification may be useful to ensure that the channel selected for communication may be free from interference caused by other devices and/or systems operating in the same frequency band. Additionally, the computing device may send a response message to the access point specifying a particular channel within the frequency band. This response may inform the access point of the channel deemed suitable based on the channel availability. For example, indicating the channel to be used within the frequency band may facilitate efficient coordination between the computing device and the access point, an may reduce ambiguity and/or facilitate a transition in channel usage. The computing device may reject the requested switch, for example, if the channel availability indicates that the requested channel is unsuitable due to conflicting usage. Such rejection may prevent the use of channels that may result in interference.

The first group of network devices 411 and/or the second group of network devices 412 may be replaced with a software layer, for example for more flexible network management and segmentation. For example, the first group of network devices 411 may be configured by a physical hardware, and the second group of network devices 412 may be configured by a software (e.g., virtual interface). For example, the first group of network devices 411 may be configured by a software (e.g., virtual interface), and the second group of network devices 412 may be configured by a physical hardware.

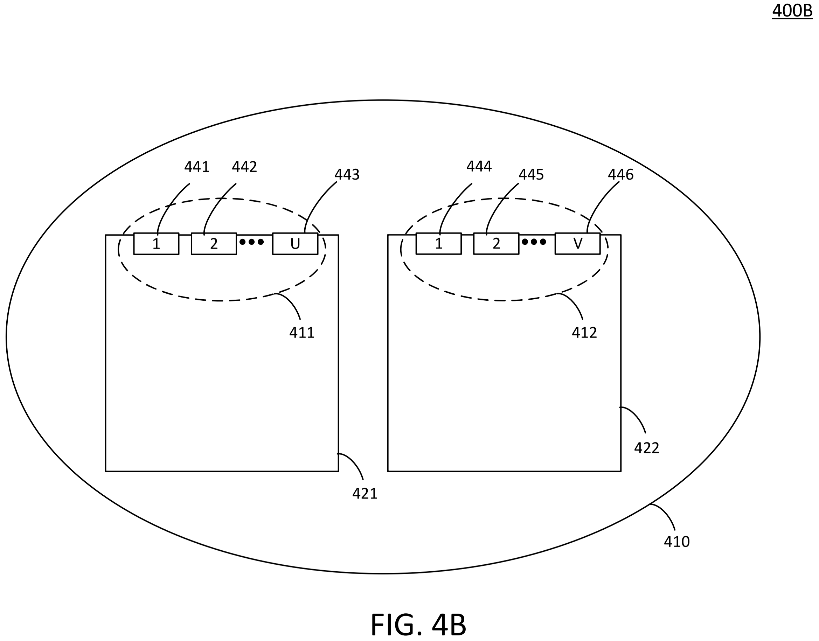

FIG. 4B shows an example of an access point 410 with a plurality of network devices. Referring to FIG. 4B, the access point 410 may comprise, for example, at least two separate/distinct chips (or two separate/distinct SOCs) (e.g., chip 421, chip 422, etc.). The chip 421 may comprise, for example, a total of *U* network devices (e.g., network device 1 441, network device 2 442, ..., network device *U* 443), where *U* is a number that is equal to or greater than one. Additionally, the chip 422 may comprise, for example, a total of *V* network devices (e.g., network device *1* 444, network device 2 445, ..., network device *V*)*,* where *V* is a number that is equal to or greater than one. *U* and *V* may or may not be the same number.

The at least two separate/distinct chips (or two separate/district SOCs) (e.g., chip 421, chip 422, etc.) may be independent of each other. The access point 410 may send (e.g., transmit) and/or receive radio signals via the *U* network devices of the chip 421 and via the *V* network devices of the chip 422.

The first group of network devices 411 may use a first power level (e.g., lower power level). The first group of network devices 411 may use a first channel that belongs to a first sub-band in a frequency band to communicate with a wireless device (e.g., mobile device 125). Additionally, the second group of network devices 412 may use a second power level (e.g., higher power level). The second group of network devices 412 may use a second channel that belongs to a second sub-band in the frequency band to communicate with a wireless device (e.g., mobile device 125).

The access point 410 may broadcast a first message (e.g., beacon message) comprising the access point's network identifier (e.g., SSID) via the first group of network devices 411 and the second group of network devices 412. A wireless device (e.g., mobile device 125) may send, to the access point 410, a first response message (e.g., probe message) to connect to the access point 410. The access point 410 may stop using the second group of network devices, for example, for a first pre-determined time, for example, if the access point 410 does not receive a first response message (e.g., probe message) via the second sub-band in the frequency band (e.g., 6 GHz band, etc.), for example, for a second pre-determined time. Any time after the first pre-determined time, the access point may broadcast a first message (e.g., beacon message) via the second sub-band in the frequency band (e.g., 6 GHz band, etc.), for example, to inform that the access point 410 may support the second power.

Optionally, if the access point 410 determines to change the power level of the first group of network devices 411 or the second group of network devices 412, the access point 410 may send, to a computing device (e.g., server 140 of FIG. 1, computing device 830 of FIG. 8, cloud server, or Automated Frequency Coordination (AFC) server, etc.), a request message. For example, if the access point 410 determines to use the first power level for the second group of network devices, the access point may send, to the computing device, a request message requesting to use the channel that belongs to the first sub-band in the frequency band (e.g., 6 GHz band, etc.) for the second group of network devices. Additionally or alternatively, if the access point 410 determines to use the second power level for the first group of network devices, the access point may send, to the computing device, a request message requesting to use the channel that belongs to the second sub-band in the frequency band (e.g., 6 GHz band, etc.) for first group of network devices. Based on receiving the request message and/or based on channel availability, the computing device (e.g., server 140 of FIG. 1, computing device 830 of FIG. 8, cloud server, or Automated Frequency Coordination (AFC) server, etc.) may send, to the access point 410, a second response message indicating whether to allow or reject the use of the requested channel. For example, the channel availability in the frequency band may be determined by identifying whether there is an absence of conflicting usage within the frequency band. This identification may be useful to ensure that the channel selected for communication may be free from interference caused by other devices and/or systems operating in the same frequency band. Additionally, the computing device may send a response message to the access point specifying a particular channel within the frequency band. This response may inform the access point of the channel deemed suitable based on the channel availability. For example, explicitly indicating the channel to be used within the frequency band may facilitate efficient coordination between the computing device and the access point, reducing ambiguity and facilitating a seamless transition in channel usage. The computing device may reject the requested switch, for example, if the channel availability indicates that the requested channel is unsuitable due to conflicting usage. Such rejection may prevent the use of channels that may result in interference.

The access point 410 may broadcast a first message (e.g., beacon message) comprising the access point's network identifier (e.g., service set identifier (SSID)) via the first group of network devices 411 and the second group of network devices 412. A wireless device (e.g., mobile device 125) may send, to the access point 410, a first response message (e.g., probe message) to connect to the access point 410. The access point 410 may stop using the second group of network devices, for example, for a first pre-determined time, for example, if the access point 410 does not receive a first response message (e.g., probe message) via the second sub-band in the frequency band (e.g., 6 GHz band, etc.), for example, for a second pre-determined time. Any time after the first pre-determined time, the access point may broadcast a first message (e.g., beacon message) via the second sub-band in the frequency band (e.g., 6 GHz band, etc.), for example, to inform that the access point 410 may support the second power.

Optionally, if the access point 410 determines to change the power level of the first group of network devices 411 or the second group of network devices 412, the access point 410 may send, to a computing device (e.g., server, cloud server, or Automated Frequency Coordination (AFC) server, etc.), a request message. For example, if the access point 410 determines to use the first power level for the second group of network devices, the access point may send, to the computing device, a request message requesting to use the channel that belongs to the first sub-band in the frequency band (e.g., 6 GHz band, etc.) for the second group of network devices. Additionally or alternatively, if the access point 410 determines to use the second power level for the first group of network devices, the access point may send, to the computing device, a request message requesting to use the channel that belongs to the second sub-band in the frequency band (e.g., 6 GHz band, etc.) for first group of network devices. Based on receiving the request message, the computing device (e.g., server, cloud server, or Automated Frequency Coordination (AFC) server, etc.) may send, to the access point 410, a second response message whether to allow to use the requested channel.

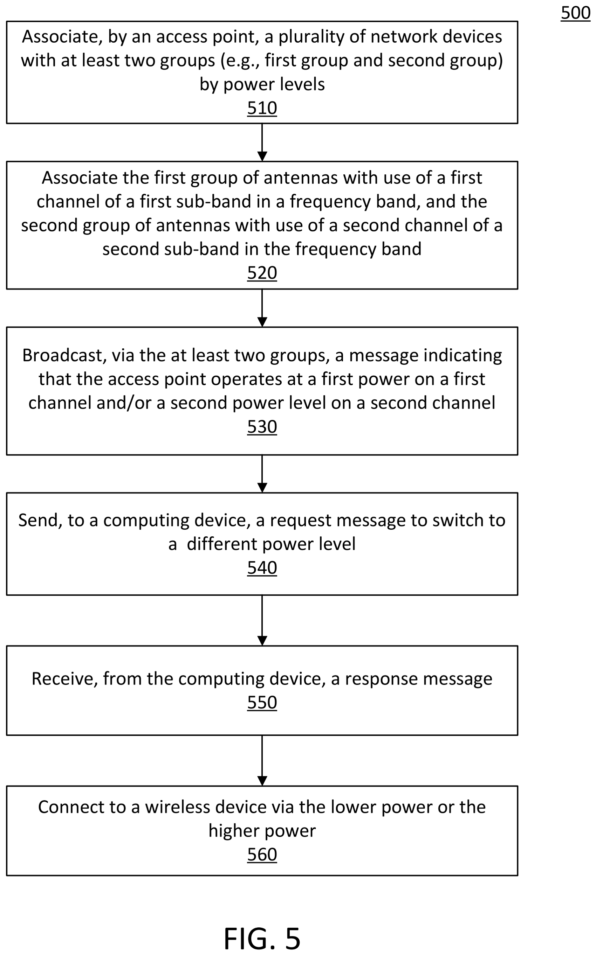

FIG. 5 shows an example method for an access point to connect to a wireless device (e.g., a user device, mobile device 125, wireless device 850). For example, an access point (e.g., access point 410 of FIGS. 4A and/or 4B, access point 810 of FIG. 8) may comprise a plurality of network devices. The plurality of network devices may comprise a plurality of antennas, and the description herein relating to network devices may additionally or alternatively apply to antennas. At step 510, the access point may associate the plurality of network devices with at least two groups (e.g., group of network devices 411 and group of network devices 412), for example, by power levels. A first group of antennas (e.g., group of network devices 411) and a second group of antennas (e.g., group of network devices 412) may be configured to operate at different power levels (e.g., a higher power level and a lower power level). For example, the maximum power of the first power level may be about 30 dBm, and the maximum power of the second power level may be about 36 dBm. These example power levels are merely for purposes of illustration, and each group may use different maximum power levels. Each group may operate at a channel bandwidth. For example, each group (e.g., first group of network devices 411 and second group of network devices 412) may operate at one of, for example, 160 MHz, 320 MHz, or any other value. The channel bandwidth may be based on, for example, one or more standards (e.g., IEEE 802.11ax or IEEE 802.11be or any other standards).

At step 520, the access point may associate the first group of antennas with use of a first channel of a first sub band in a frequency band, and the second group of antennas with use of a second channel of a second sub band in the frequency band. At step 530, the access point may broadcast, for example, via the first group of network devices and the second group of network devices, at least one message (e.g., beacon message) informing its power configuration (e.g., either the first level of power and/or second level of power). For example, the at least one message (e.g., beacon message) may inform that the first group of network devices may use the first level of power via the first channel of the first sub-band in the frequency band, and/or the second group of network devices may use the second level of power via the second channel of the second sub-band in the frequency band. For example, if a wireless device (e.g., a wireless device configured for a lower power) (e.g., mobile device 125 of FIG. 1 and/or wireless device 850 of FIG. 8) is configured to operate at the first level of power, the wireless device may connect to the access point via the first group of network devices. For example, if a wireless device (e.g., a wireless device configured for a higher power) (e.g., mobile device 125 of FIG. 1 and/or wireless device 850 of FIG. 8) is configured to operate at the second level of power, the wireless device may connect to the access point via the second group of network devices. For example, if a wireless device (e.g., a wireless device configured for dual powers) (e.g., mobile device 125 of FIG. 1 and/or wireless device 850 of FIG. 8) is configured to operate at a first level of power (e.g., lower power) or a second level of power (e.g., higher power), the wireless device may connect to the access point via the first group of network devices or the second group of network devices.

The same network identifier (e.g., the same SSID) may be used (e.g., broadcast) via both the first group of network devices for the first level of power and the second group of network devices for the second level of power. This may ensure that a wireless device may be able to recognize both groups of network devices as part of the same network despite possibly different power levels. For example, if a wireless device (e.g., a wireless device configured for dual powers) is configured to operate at a first level of power (e.g., lower power) or a second level of power (e.g., higher power), the wireless device may remain connected to the access point (e.g., the same access point) if the wireless device determines to switch to a different level of power (e.g., from the second level of power to the first level of power, or from the first level of power to the second level of power).

At step 540, the access point may optionally send, to a computing device (e.g., server 140 of FIG. 1, cloud server, AFC server, computing device 830 of FIG. 8, etc.), a request message requesting to use a channel that belongs to a sub-band that may be allotted for a different power level. For example, the access point may send, to the computing device, a request message to switch from the second level of power to the first level of power. Alternatively, the access point may send, to the computing device, a request message to switch from the first level of power to the second level of power. The computing device (e.g., server, cloud server, AFC server, etc.) may manage current channel usage, for example, to prevent interference between different wireless devices on the same channel or adjacent channels in shared spectrum environments. The computing device (e.g., server, cloud server, AFC server, etc.) may determine whether to allow the access point to use the channel that belongs to the sub-band that is allotted for the different power level, for example, based on the channel usage, overall network load, regulatory requirements, and/or potential interference with other wireless devices, etc.

At step 550, based on optionally sending the request message, the wireless device may receive, from the computing device (e.g., server, cloud server, AFC server, etc.), a response message indicating whether the request is allowed or rejected. Additionally or alternatively, if the access point may fail to detect, via the second group of network devices, a wireless device for a pre-determined time, the access point may turn off the second group of network devices (e.g., higher power level), for example, to conserve energy. After turning off the second group of network devices, the access point may regularly or irregularly broadcast, via the second group of network devices, a second message to inform that the access point operates at the second level of power. Additionally or alternatively, if the access point may fail to detect, via the first group of network devices, a wireless device for a pre-determined time, the access point may turn off the first group of network devices (e.g., lower power level), for example, to conserve energy. After turning off the first group of network devices, the access point may regularly or irregularly broadcast, via the first group of network devices, a second message to inform that the access point operates at the first level of power.

At step 560, the access point may connect to a wireless device. For example, the access point may use a first group of network devices for a first level of power (e.g., lower power) to communicate with a wireless device that is configured to operate at the first level of power (e.g., lower power). Additionally or alternatively, the access point may use a second group of network devices for a second level of power (e.g., higher power) to communicate with a wireless device that is configured to operate at the second level of power (e.g., higher power).

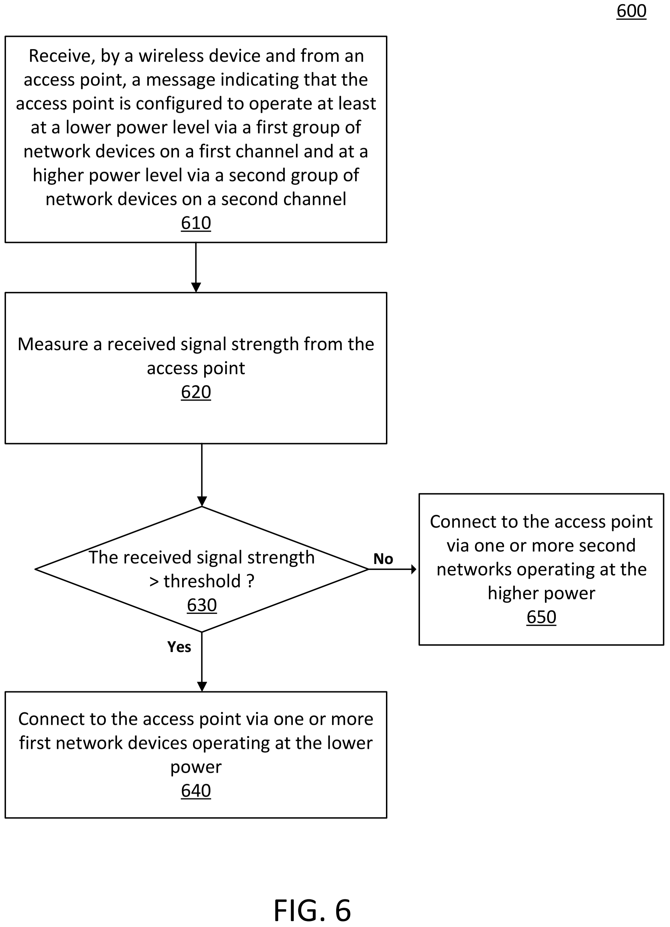

FIG. 6 shows an example method for a wireless device (e.g., a user device) to connect to an access point. The wireless device of FIG. 6 may be similar to the mobile device 125 of FIG. 1 and/or the wireless device 850 of FIG. 8 unless described otherwise. At step 610, a wireless device may receive, from an access point (e.g., access point 410 of FIGS. 4A and/or 4B and/or access point 810 of FIG. 8), a message indicating that the access point may be configured to operate at least at a lower power level via a first group of network devices on a first channel and/or at a higher power level via a second group of network devices on a second channel. For example, the first channel may belong to a first sub-band in a frequency band (e.g., 6 GHz band, etc.), and the second channel may belong to a second sub-band in the frequency band (e.g., 6 GHz band, etc.). The wireless device may be configured to operate at a lower power level or at a higher power level. At step 620, the wireless device may measure a received signal strength (or power) such as, for example, signal-to-noise ratio (SNR), signal-to-interference-plus-noise ratio (SINR), received signal strength indicator (RSSI), reference signal received power (RSRP), reference signal received quality (RSRQ), carrier to interference-plus-noise ratio (CINR), and/or any other indicator related to the strength (or power) related to the received signal from the access point, for example, based on receiving the message from the access point.

At step 630, the wireless device may determine whether the received signal strength (or power) is above a pre-determined threshold strength (or power) level. If yes (e.g., the received signal strength (or power) is above the pre-determined threshold level), step 640 may be performed. At step 640, the wireless device may determine to connect to one or more of the first group of network devices (e.g., for lower power level) of the access point via the first channel that may belong to the first sub-band. For example, the wireless device may reduce a transmit power. For example, the first sub-band may be allotted for a lower power level in the frequency band (e.g., 6 GHz band, etc.).

If no (e.g., the received signal strength (or power) is not above the pre-determined threshold strength (or power) level), step 650 may be performed. At step 650, the wireless device may determine to connect to one or more of the second group of network devices (e.g., for higher power level) of the access point via the second channel that may belong to the second sub-band. For example, the wireless device may increase a transmit power. For example, the second sub-band may be allotted for a higher power level in the frequency band (e.g., 6 GHz band, etc.). In one non-limiting example configuration, the lower power level may comprise a maximum transmit power of about, for example, 30dBm, and/or the higher power level may comprise a maximum transmit power of about, for example, 36dBm.

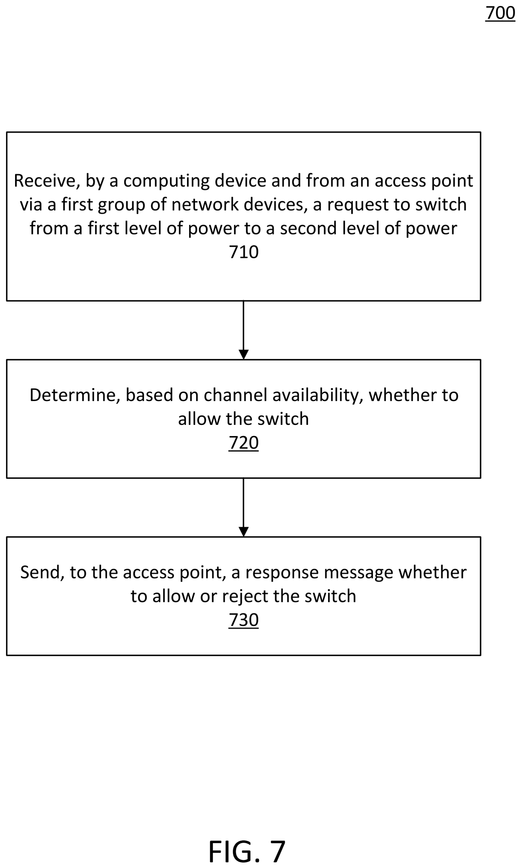

FIG. 7 shows an example method for a computing device. The computing device may be similar to the server 140 of FIG. 1 and/or the computing device 830 of FIG. 8 unless described otherwise. At step 710, the computing device (e.g., server 140 in FIG. 1, cloud server, AFC server, etc.) may receive, from an access point (e.g., access point 410 of FIGS. 4A and/or 4B and/or access point 810 of FIG. 8), for example, via a first group of network devices, a request message requesting to switch from a first level of power (e.g., lower power level) (e.g., current level of power) to a second level of power (e.g., higher power level) (e.g., another level of power). For example, the first level of power may be associated with a first channel in a frequency band, and the second level of power may be associated with a second channel in the frequency band. For example, the first channel may belong to a first sub-band that may be allotted for a lower power level in the frequency band, and the second channel may belong to a second sub-band that may be allotted for a higher power level in the frequency band. Additionally or alternatively, the computing device (e.g., server, cloud server, AFC server, etc.) may receive, from the access point (e.g., access point 410 of FIGS. 4A and/or 4B and/or access point 810 of FIG. 8), for example, via a second group of network devices, a request message requesting to switch from the second level of power (e.g., higher power level) to the first level of power (e.g., lower power level).

At step 720, the computing device may determine whether to allow the access point to switch to operate at a different power level (e.g., lower power level or higher power level), for example, based on channel availability. For example, the computing device may allow the access point to switch from the second level of power (e.g., higher power level) to the first level of power (e.g., lower power level), for example, if a third channel of the first sub-band, which may be allotted for a lower power level in the frequency band, is available. The computing device may reject the access point to switch from the second level of power (e.g., higher power level) to the first level of power (e.g., lower power level), for example, if the third channel of the first sub-band, which may be allotted for a lower power level in the frequency band, is not available. Additionally or alternatively, the computing device may allow the access point to switch from the first level of power (e.g., lower power level) to the second level of power (e.g., higher power level), for example, if a fourth channel of the second sub-band, which may be allotted for a higher power level in the frequency band, is available. The computing device may reject the access point to switch from the first level of power (e.g., lower power level) to the second level of power (e.g., higher power level), for example, if the fourth channel of the first sub-band, which may be allotted for a higher power level in the frequency band, is not available. At step 730, the computing device may send, to the access point, a response message indicating whether to allow or reject the switch, for example, based on the channel availability.

FIG. 8 shows an example method for an access point 810, a wireless device 850 (e.g., a user device, mobile device 125 of FIG, 1), and a computing device 830 (e.g., server 140 of FIG. 1). Referring to FIG. 8, at step 811, an access point 810 (e.g., substantially similar to access point 410 and/or access point 127 unless described otherwise) may associate a first group of network devices (e.g., first group of network devices 411 of FIGS. 4A and/or 4B) with a first channel for a first power level (e.g., lower power). At step 812, the access point 810 may associate a second group of network devices (e.g., second group of network devices 412 of FIGS. 4A and/or 4B) with a second channel for a second power level (e.g., higher power). As described herein, each group (e.g., the first group and the second group) of network devices may comprise a plurality of antennas, and the description herein relating to network devices may additionally or alternatively apply to radio antennas. For example, the first group of network devices may be used for the first power level (e.g., lower power), and/or the second group of network devices may be used for the second power level (e.g., higher power). For example, the first channel for the first power level (e.g., lower power) may be associated with a first channel of a first sub-band in a frequency band, and/or the second channel for the second power level (e.g., higher power) may be associated with a second channel of a second sub-band in the frequency band.

At step 841, the access point 810 may broadcast at least one message (e.g., beacon message) comprising a first network identifier (e.g., SSID) of the access point 810 via the first group of network devices to a first wireless interface 891. At step 842, the access point 810 may broadcast at least one message (e.g., beacon message) comprising a second network identifier (e.g., SSID) of the access point 810 via the second group of network devices to a second wireless interface 892. The first network identifier (e.g., SSID) and the second network identifier (e.g., SSID) may be identical.

A wireless device 850 (e.g., user device) (e.g., mobile device 125) may be capable of using at least two power levels (e.g., first power level and second power level). The wireless device 850 may measure a received signal strength/power (e.g., SNR, SINR, RSSI, RSRP, RSRQ, CINR, and/or any other indicator related to the strength/power related to the received signal from the access point 810) from the access point 810. At step 851, the wireless device 850 may determine whether it is located at a cell edge. If the wireless device 850 determines that it is located at a cell edge (851:Yes), step 854 may be performed. For example, the wireless device 850 may determine to use the second power level (e.g., higher power) and connect to the access point 810 via the second wireless interface 892. If the wireless device 850 determines that it is not located at a cell edge (851:No), step 852 may be performed. At step 852, the wireless device 850 may determine if the received signal strength/power is below or above a pre-determined threshold. If the wireless device 850 determines that the received signal strength/power is below a pre-determined threshold (852:YES), step 854 may be performed. For example, the wireless device 850 may determine to use the second power level (e.g., higher power) and connect to the access point 810 via the second wireless interface 892. If the wireless device 850 determines that the received signal strength/power is not below or equal to the pre-determined threshold (852: No), step 853 may be performed. For example, the wireless device 850 may determine to use the first power level (e.g., lower power) and connect to the access point 810 via the first wireless interface 891.

Optionally, the access point 810 may send, to a computing device 830, a request message 860 to request to switch from the second power level to the first power level. The computing device 830 may be substantially similar to server 140 unless otherwise described herein. Additionally or alternatively, the access point 810 may send, to the computing device 830, a request message 860 to request to switch from the first power level to the second power level. For example, based on receiving the request message 860, the computing device 830 may send a response message 861 to indicate whether to allow the switch, for example, based on channel availability. For example, the computing device 830 may send, to the access point 810, a response message 861 allowing the switch from the second power level to the first power level, for example, if a third channel of the first sub-band, which may be allotted for a lower power level in a frequency band, is available. Alternatively, the computing device 830 may send, to the access point 810, a response message 861 rejecting the switch from the second power level to the first power level, for example, if a third channel of the first sub-band, which may be allotted for a lower power level in a frequency band, is not available. Additionally or alternatively, the computing device 830 may send, to the access point 810, a response message 861 allowing the switch from the first power level to the second power level, for example, if a fourth channel of the second sub-band, which may be allotted for a higher power level in the frequency band, is available. Alternatively, the computing device 830 may send, to the access point 810, a response message 861 rejecting the switch from the first power level to the second power level, for example, if the fourth channel of the second sub-band, which may be allotted for a higher power level in the frequency band, is not available.

Clause 1A. A method comprising: associating a first group of network devices with a first level of power associated with a first channel in a band.

Clause 1B. The method of clause 1A, further comprising: associating a second group of network devices with a second level of power associated with a second channel in the band.

Clause 1C. The method of any of clauses 1A and 1B, further comprising: sending, to at least one user device, a message indicating that an access point is configured to operate at one or more of: the first level of power; or the second level of power.

Clause 1D. The method of any of clauses 1A-1C, further comprising: connecting the at least one user device to the access point. Clause 1 referenced herein may comprise any one or more of clauses 1A, 1B, 1C, and/or 1D.

Clause 2. The method of clause 1, further comprising, sending, to a computing device, a request message to switch from the second level of power associated with the second channel to the first level of power associated with the first channel.

Clause 3. The method of any one of clauses 1 and 2, further comprising broadcasting, a same network identifier via the first group of network devices and the second group of network devices.

Clause 4. The method of any one of clauses 1-3, wherein at least one of the first group of network devices and the second group of network devices operates at a channel bandwidth of either about 160 MHz or about 320 MHz.

Clause 5. The method of any one of clauses 1-4, further comprising turning off the second group of network devices based on the access point failing to detect a user device connected to the second group of network devices for a pre-determined time.

Clause 6. The method of any one of clauses 1-5, further comprising broadcasting, via the access point and after turning off the second group of network devices, a second message indicating that the access point operates at the second level of power.

Clause 7. The method of any one of clauses 1-6, wherein a maximum effective isotropic radiated power of the first level of power comprises about 30 dBm and a maximum effective isotropic radiated power of the second level of power comprises about 36 dBm.

Clause 8A. A method comprising: receiving, by a wireless device and from an access point configured to operate at a first level of power that is associated with a first channel in a band and a second level of power that is associated with a second channel in the band, a message indicating one or more of: a first network device of the access point available at the first level of power; and a second network device of the access point available at the second level of power.

Clause 8B. The method of clause 8A, further comprising: measuring a received signal strength from the access point.

Clause 8C. The method of any of clauses 8A and 8B, further comprising: connecting to the access point via the first network device of the access point. Clause 8 referenced herein may comprise any one or more of clauses 8A, 8B, and/or 8C.

Clause 9. The method of clause 8, further comprising: connecting, based on the received signal strength being below a pre-determined threshold, to the access point configured to operate at the second level of power.

Clause 10. The method of any one of clauses 8 and 9, further comprising monitoring the received signal strength from the access point to determine whether to switch between the first network device and the second network device.

Clause 11. The method of any one of clauses 8-10, further comprising: receiving a same network identifier via the first network device and the second network device.

Clause 12. The method of any one of clauses 8-11, further comprising receiving, from the access point, a second message indicating that the access point operates at one or more of: the first level of power; and the second level of power.

Clause 13. The method of any one of clauses 8-12, wherein the wireless device connects, at a channel bandwidth of either about 160 MHz or about 320 MHz, to the access point.

Clause 14. The method of any one of clauses 8-13, further comprising: re-measuring the received signal strength, based on a change in a location of the wireless device relative to the access point.

Clause 15. The method of any one of clauses 8-14, further comprising switching to the second network device of the access point based on a location of the wireless device.

Clause 16. The method of any one of clauses 8-15, wherein the connecting is based on determining whether the received signal strength is above a pre-determined threshold.

Clause 17A. A method comprising: receiving, by a computing device and from an access point, a request message to switch from a first level of power associated with a first channel in a band to a second level of power associated with a second channel in the band.

Clause 17B. The method of clause 17A, further comprising: determining, based on channel availability, whether to allow the switch.

Clause 17C. The method of any of clauses 17A and 17B, further comprising: sending, to the access point, a response message to allow the switch. Clause 17 referenced herein may comprise any one or more of clauses 17A, 17B, and/or 17C.

Clause 18. The method of clause 17, wherein the channel availability is associated with an absence of conflicting channel usage in the band.

Clause 19. The method of any one of clauses 17 and 18, wherein the response message indicates a channel in the band.

Clause 20. The method of any one of clauses 17-19 further comprising: rejecting, based on the channel availability, the switch.

Clause 21. A computing device comprising: one or more processors; and a memory storing instructions that, when executed cause the computing device to perform the method of any one of clauses 1-7.

Clause 22. A computing device comprising: one or more processors; and a memory storing instructions that, when executed cause the computing device to perform the method of any one of clauses 8-16.

Clause 23. A computing device comprising: one or more processors; and a memory storing instructions that, when executed cause the computing device to perform the method of any one of clauses 17-20.

Clause 24. A computing device comprising: one or more processors; and a memory storing instructions that, when executed cause the computing device to perform the method of any one of clauses 1-20.

Clause 25. A computer-readable medium storing instructions that cause performance of the method of any of clauses 1-7.

Clause 26. A computer-readable medium storing instructions that cause performance of the method of any of clauses 8-16.

Clause 27. A computer-readable medium storing instructions that cause performance of the method of any of clauses 17-20.

Clause 28. A computer-readable medium storing instructions that cause performance of the method of any of clauses 1-20.

Clause 29. A system comprising: a computing device configured to perform the method of any one of clauses 1-7; and the at least one user device configured to connect to the access point.

Clause 30. A system comprising: a wireless device configured to perform the method of any one of clauses 6-16; and a computing device configured to send the message indicating one or more of: a first network device of the access point available at the first level of power; and a second network device of the access point available at the second level of power.

Clause 31. A system comprising: a computing device configured to perform the method of any one of clauses 17-20; and the access point configured to send the request message to switch from a first level of power associated with a first channel in a band to a second level of power associated with a second channel in the band.

Clause 32. A system comprising: a computing device configured to perform any of clauses 1-7, and 17-20; and a wireless device configured to perform the method of any of clauses 8-16.

Although examples are described above, features and/or steps of those examples may be combined, divided, omitted, rearranged, revised, and/or augmented in any desired manner. Various alterations, modifications, and improvements will readily occur to those skilled in the art. Such alterations, modifications, and improvements are intended to be part of this description, though not expressly stated herein, and are intended to be within the spirit and scope of the disclosure. Accordingly, the foregoing description is by way of example only, and is not limiting.

## Claims

1. A method comprising:
associating a first group of network devices with a first level of power associated with a first channel in a band;
associating a second group of network devices with a second level of power associated with a second channel in the band;
sending, to at least one user device, a message indicating that an access point is configured to operate at one or more of:
the first level of power; or
the second level of power; and
connecting the at least one user device to the access point.

2. The method of claim 1, further comprising, sending, to a computing device, a request message to switch from the second level of power associated with the second channel to the first level of power associated with the first channel.

3. The method of any one of claims 1 and 2, further comprising broadcasting, a same network identifier via the first group of network devices and the second group of network devices.

4. The method of any one of claims 1-3, wherein at least one of the first group of network devices and the second group of network devices operates at a channel bandwidth of either about 160 MHz or about 320 MHz.

5. The method of any one of claims 1-4, further comprising turning off the second group of network devices based on the access point failing to detect a user device connected to the second group of network devices for a pre-determined time.

6. The method of any one of claims 1-5, further comprising broadcasting, via the access point and after turning off the second group of network devices, a second message indicating that the access point operates at the second level of power.

7. The method of any one of claims 1-6, wherein a maximum effective isotropic radiated power of the first level of power comprises about 30 dBm and a maximum effective isotropic radiated power of the second level of power comprises about 36 dBm.

8. The method of any of claims 1-7, further comprising:
receiving, from the access point, a request message to switch the at least one user device from the first level of power associated with a first channel in a band to the second level of power associated with a second channel in the band;
determining, based on channel availability, whether to allow the switch; and
sending, to the access point, a response message to allow the switch.

9. The method of any of claims 1-8, further comprising:
receiving, from the access point, a request message to switch the at least one user device from the first level of power associated with a first channel in a band to the second level of power associated with a second channel in the band;
determining, based on channel availability, whether to allow the switch; and
rejecting, based on the channel availability, the switch.

10. The method of any one of claims 1-9, further comprising:
measuring a received signal strength from the access point; and
connecting, based on the received signal strength, the at least one user device to the access point via the first group of network devices.

11. The method of any one of claims 1-10, further comprising:
monitoring a received signal strength from the access point to determine whether to switch the at least one user device between the first group of network devices and the second group of network devices.

12. The method of any one of claims 1-11, further comprising switching the at least one user device to the second group of network devices based on a location of the at least one user device.

13. A computing device comprising:
one or more processors; and
memory storing instructions that, when executed by the one or more processors, cause the at least one user device to perform the method of any one of claims 1-12.

14. A system comprising:
a computing device configured to perform any of claims 1-12; and
a wireless device configured to connect to the access point.

15. A computer-readable medium storing instructions that cause performance of the method of any of claims 1-12.
